# EUROPEAN PATENT APPLICATION

(11) **EP 4 725 884 A1**
(43) Date of publication of application: **15.04.2026**
(21) Application number: 25201553.2
(22) Date of filing: 11.09.2025
(51) Int. Cl.: B65H 54/52

(54) **YARN WINDER**

(30) Priority: 11.10.2024 JP 2024179223
(71) Applicant: TMT Machinery, Inc., Osaka-shi, Osaka 541-0041 (JP)
(72) Inventor: TANAKA, Shunya, Kyoto-shi, Kyoto, 612-8686 (JP); ARAKI, Shumpei, Kyoto-shi, Kyoto, 612-8686 (JP); KOBAYASHI, Shuhei, Kyoto-shi, Kyoto, 612-8686 (JP)
(74) Representative: Hoffmann Eitle

(57) **Abstract**

An object of the present invention is to effectively cool a motor even when the motor moves relative to a fixed fan, while the motor is protected by a cover member.

The following components are provided: a first movement mechanism and second movement mechanism configured to move a contact roller 25; a contact roller motor 32 which is attached to a front end portion of the contact roller 25 and which is configured to rotationally drive the contact roller 25; and a front cover 26 including a base portion 26a which opposes the contact roller 25 over the contact roller motor 32 in a front-rear direction and which is provided with an opening 26a1; and a fan 33 which is attached to the front cover 26 while being provided in the opening 26a1 and which is configured to send cooling wind to the contact roller motor 32 side in the front-rear direction. When viewed in the front-rear direction, the fan 33 is provided so that at least a part of an outlet overlaps the contact roller motor 32 positioned in a traveling range of the contact roller motor 32.

## Description

### BACKGROUND OF THE INVENTION

The present invention relates to a yarn winder configured to wind yarns onto bobbins.

Patent Literature 1 (Japanese Laid-Open Patent Publication No. 2024-038600) discloses a yarn winder configured to wind yarns onto bobbins attached to a bobbin holder, so as to form packages. Such a yarn winder includes: a contact roller which is able to make contact with the packages; and a contact roller motor configured to rotationally drive the contact roller. The contact roller is configured to rotate while applying a contact pressure to an outer circumferential surface of each package, so as to adjust the shape of the package. A part (cover member) of a second housing supporting the contact roller is positioned on one side of the contact roller in a drawing direction of the contact roller (hereinafter, this direction will be simply referred to as the drawing direction).

### SUMMARY OF THE INVENTION

For a space reason, it is difficult to use a large motor as a motor configured to rotationally drive the contact roller in the above-described yarn winder. Therefore, a roller with a relatively small diameter is used as the contact roller to achieve weight reduction so that the load on the motor is not too high. However, when the diameter of the contact roller is small, the rotation speed of the contact roller needs to be high, with the result that the load on the motor is still high. As such, because the motor configured to rotationally drive the contact roller is under high load, an amount of heat generated at the motor is large. This leads to early breakage of an inner components such as a coupling, due to the heat.

The inventors of the subject application considered to provide a fan for cooling the motor configured to rotationally drive the contact roller. The motor is typically attached to one end portion of the contact roller on one side in the drawing direction. That is, the motor is provided between the contact roller and the above-described cover member in the drawing direction. In this case, it is conceivable to form an opening penetrating the cover member in the drawing direction and to provide the fan in this opening. Because of this, the fan can suck air provided outside the cover member and can send cooling wind to the motor provided inside the cover member.

The contact roller is typically movable in order to adjust the magnitude of the contact pressure applied to the package. The motor is attached to one end portion of the contact roller on one side in the drawing direction, and thus this motor moves as the contact roller moves.

When the fan configured to cool the motor is attached to the motor, the fan moves together as the motor in accordance with the movement of the contact roller. Therefore, the formation of a large opening at the cover member is necessary for allowing the fan to move in the opening of the cover member. The cover member has a function of protecting the motor from oil and fiber waste. However, when the large opening is formed, the cover member cannot sufficiently exert this function. Therefore, the inventors of the subject application have been considering to attach the fan to the cover member. In this case, because the motor moves relative to the fan, it is difficult to uniquely decide a position to attach the fan so that the motor is effectively cooled.

An object of the present invention is to provide a yarn winder which is, while a motor is protected by a cover member, configured to effectively cool the motor even when the motor moves relative to a fixed fan.

According to a first aspect of the invention, a yarn winder is configured to wind yarns respectively onto bobbins so as to form packages and comprises: a bobbin holder to which the bobbins are attached; a contact roller which extends at least in a predetermined drawing direction and which is configured to apply a contact pressure to an outer circumferential surface of each of the packages; a movement mechanism configured to move the contact roller; a motor which is attached to one end portion of the contact roller on one side in the drawing direction and which is configured to rotationally drive the contact roller; a cover member which covers the motor and which includes a portion which opposes the contact roller over the motor in the drawing direction and which is provided with an opening penetrating the portion in the drawing direction; and a fan which is attached to the cover member while being provided in the opening of the cover member and which is configured to send cooling wind to the motor side in the drawing direction, the movement mechanism being configured to move the contact roller so that at least one of an axial direction of the contact roller and a position of the contact roller on a virtual plane orthogonal to the drawing direction changes, the motor being configured to move inside the cover member as the contact roller is moved by the movement mechanism, and when viewed in the drawing direction, the fan being provided so that at least a part of an outlet overlaps the motor positioned in a traveling range of the motor when the contact roller is moved by the movement mechanism.

According to this aspect, the fan is attached to the cover member. Being different from a case where the fan is attached to the motor, it is therefore unnecessary to form a large opening on the cover member. Therefore, the motor is protected by the cover member. The outlet of the fan viewed in the drawing direction is provided so as to at least partially overlap the motor positioned in the traveling range of the motor when the contact roller is moved by the movement mechanism. With this arrangement, even when the motor moves relative to the fixed fan, the cooling wind sent from the fan reliably hits the motor so as to effectively cool the motor.

According to a second aspect of the invention, the yarn winder of the first aspect further comprises a flow adjuster which is provided between the fan and the contact roller in the drawing direction and around at least a part of the circumference of the motor viewed in the drawing direction and which is configured to adjust the cooling wind sent from the fan.

According to this aspect, the flow adjuster makes it possible to suppress the cooling wind sent from the fan from flowing away from the motor viewed in the drawing direction. It is therefore possible to reliably send the cooling wind from the fan to the vicinity of the motor so as to further effectively cool the motor.

According to a third aspect of the invention, the yarn winder of the second aspect is arranged such that the flow adjuster opposes at least a part of the motor in a direction orthogonal to the drawing direction.

According to this aspect, the flow adjuster makes it possible to allow the cooling wind sent from the fan to flow in a gap between the motor and the flow adjuster. It is therefore possible to further effectively cool the motor.

According to a fourth aspect of the invention, the yarn winder of the third aspect is arranged such that the flow adjuster is provided across one end portion of the motor on the one side in the drawing direction.

According to this aspect, a part of the flow adjuster is provided on the one side of the motor in the drawing direction, and this part of the flow adjuster makes it possible to allow the cooling wind from the fan to flow into the gap between the motor and the flow adjuster. It is therefore possible to further effectively cool the motor.

According to a fifth aspect of the invention, the yarn winder of any one of the second to fourth aspects is arranged such that the flow adjuster is attached to the motor.

According to this aspect, even when the motor moves, the positional relationship between the flow adjuster and the motor does not change. It is therefore possible to reliably prevent the interference between the flow adjuster and the motor.

According to a sixth aspect of the invention, the yarn winder of the fifth aspect is arranged such that, when viewed in the drawing direction, at least a part of the flow adjuster is circular-arc-shaped and concentric with the motor.

According to this aspect, the motor is cooled as uniformly as possible.

According to a seventh aspect of the invention, the yarn winder of the fifth or sixth aspect is arranged such that the flow adjuster is positioned not to oppose the fan in the direction orthogonal to the drawing direction.

According to this aspect, even when the motor moves, the interference between the flow adjuster and the fan is avoided.

According to an eighth aspect of the invention, the yarn winder of any one of the fifth to seventh aspects is arranged such that the flow adjuster is configured to adjust the cooling wind, which is sent from the fan, so as to flow along the axial direction of the contact roller.

According to this aspect, the motor is further effectively cooled by the cooling wind flowing along the axial direction of the contact roller.

According to a ninth aspect of the invention, the yarn winder of the eighth aspect is arranged such that the motor is provided with a protruding fin extending along the axial direction.

According to this aspect, the flow adjuster allows the cooling wind sent from the fan to flow along a direction in which the fin extends. Therefore, the cooling effect of the fin is sufficient.

According to a tenth aspect of the invention, the yarn winder of any one of the second to ninth aspects is arranged such that the cover member is box-shaped and provided with an opening on the other side of the cover member in the drawing direction, the flow adjuster is provided inside the cover member, the cover member includes a flow adjusting unit which is provided around one part of the circumference of the motor viewed in the drawing direction and which is configured to adjust the cooling wind sent from the fan, the flow adjusting unit is not provided around another part of the circumference of the motor viewed in the drawing direction, and the flow adjuster is provided around the another part of the circumference of the motor.

According to this aspect, because (i) the flow adjusting unit of the cover member is not provided around the another part of the circumference of the motor and (ii) the flow adjuster is provided around this another part of the circumference of the motor, the cooling wind sent from the fan is adjusted in a wide range around the circumference of the motor. It is therefore possible to further effectively cool the motor.

According to an eleventh aspect of the invention, the yarn winder of any one of the first to tenth aspects further comprises: a turret which rotatably cantilevers the bobbin holder and which is rotatable; a turret driving unit configured to rotate the turret; and a controller. This controller is configured to: control the movement mechanism to move the contact roller in accordance with thickening of the packages during a winding-start initial period which begins when the yarns start to be wound onto the bobbins and which ends when the winding diameter of the each of the packages reaches a predetermined size; and control the turret driving unit to rotate the turret in accordance with the thickening of the packages so as to move the packages during an actual winding period which begins when the winding diameter of the each of the packages reaches the predetermined size and which ends when the formation of the packages is completed, and when viewed in the drawing direction, the fan is provided so that the center of the outlet is identical with the center of the motor during the actual winding period.

According to this aspect, the cooling wind sent from the fan reliably hits the motor so as to effectively cool the motor during the actual winding period.

### BRIEF DESCRIPTION OF THE DRAWINGS

FIG. 1 is a profile of a take-up apparatus including a yarn winder of an embodiment.
FIG. 2 is a front view of the yarn winder.
FIG. 3(a) illustrates a first movement mechanism, and FIG. 3(b) illustrates a second movement mechanism.
FIG. 4 illustrates the positional relationship between a contact roller motor and an outlet of a fan. FIG. 4(a) shows an actual winding period, and FIG. 4(b) shows the contact roller at an initial position.
FIG. 5 is a cross section of the contact roller motor and its surroundings on a plane orthogonal to a left-right direction.
FIG. 6 is a perspective view of the contact roller motor.
FIG. 7 is a table showing results of a comparison test for confirming a cooling effect.
FIG. 8 shows the positional relationship between a flow adjuster and contact roller motor of one modification.

### DESCRIPTION OF THE PREFERRED EMBODIMENTS

### (Outline of Take-Up Apparatus)

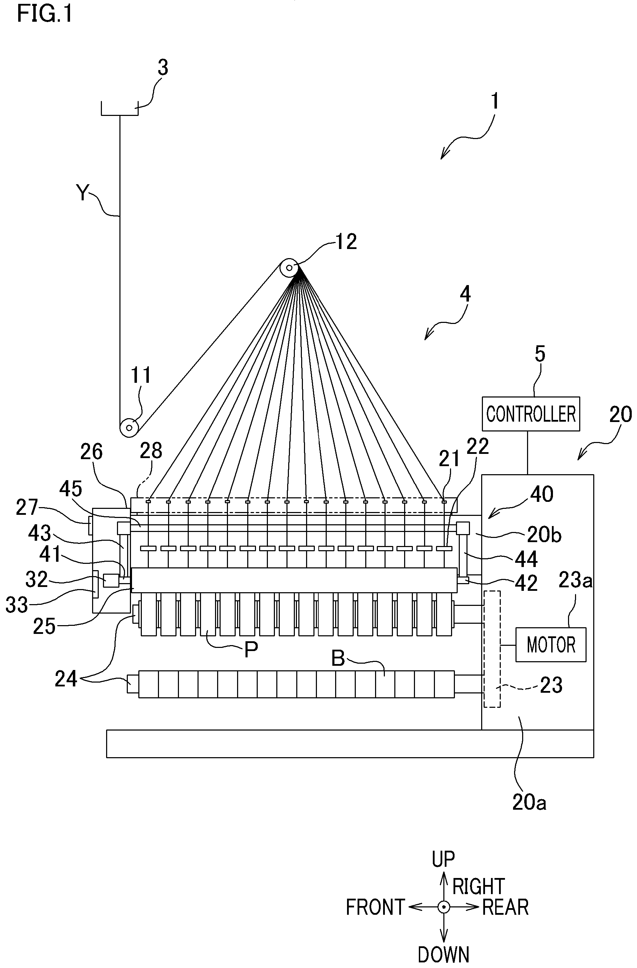

To begin with, the following will describe a take-up apparatus 1 including a yarn winder 4 of the present embodiment, with reference to FIG. 1. FIG. 1 is a profile of the take-up apparatus 1. Hereinafter, a left-right direction on the plane of FIG. 1 will be referred to as the front-rear direction, and a direction perpendicular to the plane will be referred to as the left-right direction. Furthermore, a direction orthogonal to both the front-rear direction and the left-right direction will be referred to as the up-down direction (vertical direction) in which the gravity acts. The front-rear direction and the left-right direction are substantially in parallel to a horizontal direction.

The take-up apparatus 1 is configured to take up yarns Y spun out from a spinning apparatus 3 and to wind the yarns Y onto the respective bobbins B, so as to form packages P. The spinning apparatus 3 is, e.g., configured to discharge molten polymer which is a material of the yarns Y. The material of the yarns Y is, e.g., a polyester-based material such as PET. However, the disclosure is not limited to this. Each yarn Y is, e.g., a monofilament yarn made of a single filament. However, the disclosure is not limited to this. The take-up apparatus 1 mainly includes a first godet roller 11, a second godet roller 12, and the yarn winder 4.

The first godet roller 11 is a roller having an axis substantially in parallel to the left-right direction. For example, the first godet roller 11 is provided below the spinning apparatus 3. The first godet roller 11 is provided above a front end portion of the yarn winder 4. The yarns Y are wound onto the first godet roller 11 while being aligned in the left-right direction. The first godet roller 11 is rotationally driven by a motor (not illustrated). Because of this, the first godet roller 11 feeds the yarns Y to a downstream side in a yarn running direction.

The second godet roller 12 is a roller having an axis substantially in parallel to the left-right direction. The second godet roller 12 is provided downstream of the first godet roller 11 in the yarn running direction. The second godet roller 12 is provided above and behind the first godet roller 11. The second godet roller 12 is rotationally driven by a motor (not illustrated). Because of this, the second godet roller 12 feeds the yarns Y to the downstream side in the yarn running direction.

The yarn winder 4 is configured to wind the yarns Y onto the respective bobbins B, so as to form packages P. The yarn winder 4 is provided downstream of the second godet roller 12 in the yarn running direction. The yarn winder 4 is provided below the second godet roller 12.

### (Yarn Winder)

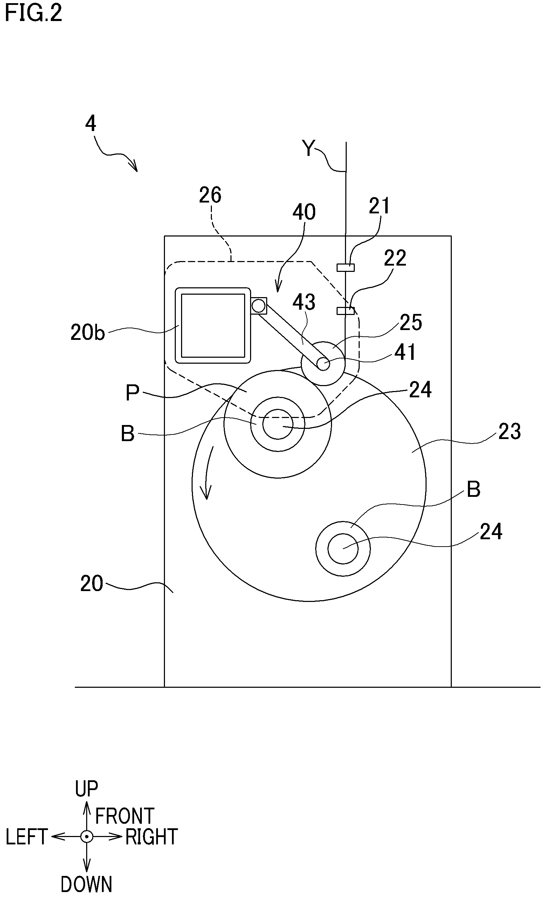

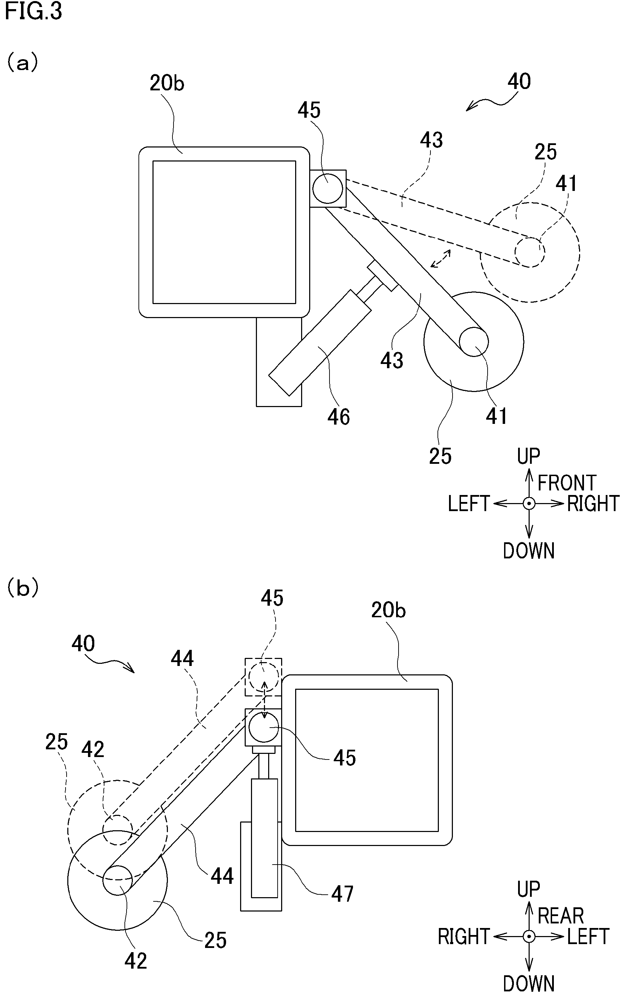

The following will describe the yarn winder 4 with reference to FIG. 2 and FIG. 3. FIG. 2 is a front view of the yarn winder 4. In regard to a front cover 26 described later, FIG. 2 shows only its outer shape by using dotted lines.

As shown in FIG. 1 and FIG. 2, the yarn winder 4 mainly includes a base 20, fulcrum guides 21, traverse guides 22, a turret 23, two bobbin holders 24, a contact roller 25, a contact roller motor 32 (motor of the present invention), a fan 33, and the front cover 26 (cover member of the present invention). The sections of the yarn winder 4 are controlled by a controller 5.

As shown in FIG. 1, the base 20 includes: a base main body portion 20a provided at a rear end portion of the yarn winder 4; and a supporting body 20b which is fixed to an upper portion of the base main body portion 20a and which extends forward. The base main body portion 20a supports the turret 23, etc. The supporting body 20b supports the contact roller 25 and the traverse guides **22.**

The fulcrum guides 21 are provided for the respective yarns **Y,** and are aligned in the front-rear direction. The fulcrum guides 21 are attached to a guide supporting member 28 supported by the supporting body **20b.** As the yarns Y are threaded onto the respective fulcrum guides **21,** the fulcrum guides 21 function as fulcrums of the traversal of the respective yarns **Y.**

The traverse guides 22 are provided for the respective yarns Y, and are aligned in the front-rear direction. The traverse guides 22 are driven by a traverse motor (not illustrated), and are configured to reciprocate in the front-rear direction. With this arrangement, the yarns Y threaded to the traverse guides 22 are traversed about the fulcrum guides 21.

The turret 23 is a disc-shaped member having an axis substantially in parallel to the front-rear direction. The turret 23 is rotatably supported by the base main body portion 20a. The turret 23 rotatably supports the two bobbin holders 24. The turret 23 is rotationally driven by a turret motor 23a (turret driving unit). The turret 23 is configured to move the two bobbin holders 24 by rotating about a rotation axis substantially in parallel to the front-rear direction. With this arrangement, the yarn winder 4 is structured so that the positions of the two bobbin holders 24 are switchable with each other. While the yarns Y are wound onto bobbins B attached to one bobbin holder 24, the replacement of bobbins B is performable for the other bobbin holder 24.

To each of the two bobbin holders 24, bobbins B are attached. Each of the two bobbin holders 24 extends forward from the turret 23. The two bobbin holders 24 are respectively and rotatably supported by the upper end portion and lower end portion of the turret 23 supported by the base main body portion 20a. In other words, the two bobbin holders 24 are cantilevered by the base main body portion 20a provided on the rear side. The axes of the two bobbin holders 24 are substantially in parallel to the front-rear direction. The leading end side (front end portion) of each bobbin holder 24 is typically a working side where operations such as the attachment of the bobbins B to the bobbin holder 24 are performed.

The bobbins B are provided for the respective yarns Y, aligned in the front-rear direction, and attached to each bobbin holder 24. The number of the bobbins B attached to one bobbin holder 24 is, e.g., 16. The two bobbin holders 24 are rotationally driven by the respective winding motors (not illustrated).

The axis of the contact roller 25 at an initial position to start winding the yarns Y onto the bobbins B is substantially in parallel to the front-rear direction. The contact roller 25 is movable from the initial position by means of a second movement mechanism 47 described later, so as to be tilted from the horizontal direction (front-rear direction). Even when the contact roller 25 is tilted by the second movement mechanism 47, the contact roller 25 extends at least in the front-rear direction (drawing direction of the present invention).

The contact roller 25 is provided immediately above the upper bobbin holder 24. The contact roller 25 is rotatably supported by the supporting body 20b and a roller supporting mechanism 40 described later. A supporting state of the contact roller 25 is detailed later. The contact roller 25 is rotationally driven by the contact roller motor 32 (see FIG. 1). When the yarns Y are wound, the contact roller 25 rotates while making contact with the outer circumferential surfaces of the packages P supported by the upper bobbin holder 24. Because of this, the contact roller 25 applies a contact pressure to the outer circumferential surfaces of the packages P which are being wound and adjusts the shape of each package P.

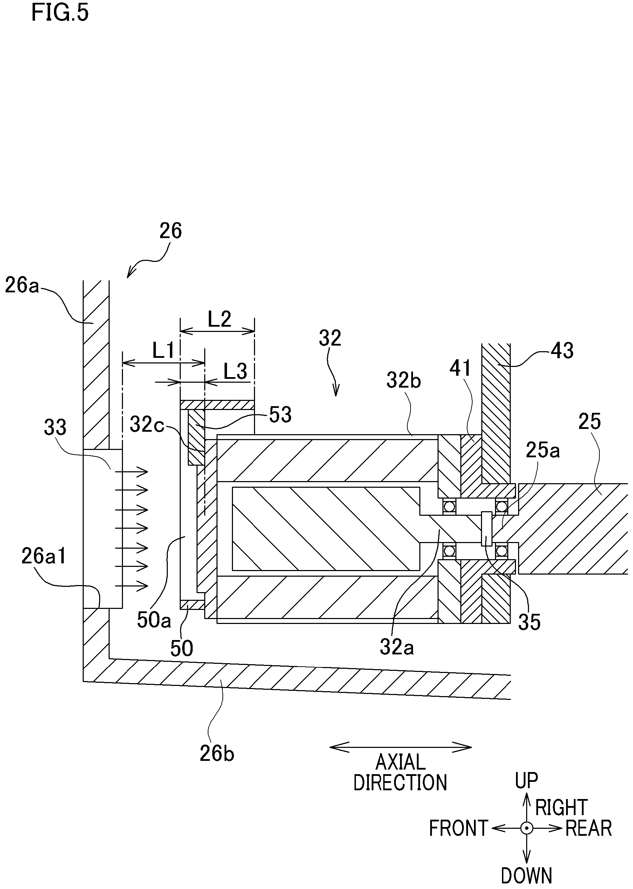

The contact roller motor 32 is configured to transmit power to the contact roller 25 via a coupling 35 (see FIG. 5), and to rotationally drive the contact roller 25. As shown in FIG. 1, the contact roller motor 32 is attached to a front end portion of the contact roller 25. The fan 33 is provided in front of the contact roller motor 32. The fan 33 is configured to send cooling wind to the contact roller motor 32 side (rear side) in the front-rear direction.

As shown in FIG. 1, the front cover 26 is provided at a front end portion of the supporting body 20b. The front cover 26 is provided with an input unit 27 for allowing an operator to input an instruction into the yarn winder 4. The input unit 27 is formed of, e.g., an operation button and a touch panel. For example, the front cover 26 is provided for at least partially covering the constituent features of the yarn winder 4. In the present embodiment, the front cover 26 has a function of protecting a circuit board (not illustrated), etc. which is electrically connected to the contact roller motor 32 and the input unit 27 from oil and fiber waste. The front cover 26 supports the fan 33.

In the yarn winder 4 structured as described above, when the upper bobbin holder 24 is rotationally driven, the yarns Y traversed by the traverse guides 22 are wound onto the bobbins B. As a result, the packages P are formed. While the packages P are being formed, the contact roller 25 is rotationally driven by the contact roller motor 32 so as to apply the contact pressure to the outer circumferential surface of each package P. As a result, the shape of each package P is adjusted. When the formation of the packages P is completed, the turret 23 rotates to switch over the upper and lower positions of the two bobbin holders 24. As a result, the bobbin holder 24 having been at the lower position is moved to the upper position. This allows the yarns Y to be wound onto the bobbins B attached to the bobbin holder 24 having been moved to the upper position, to form packages P again. The bobbin holder 24 to which the fully-wound packages P are attached is moved to the lower position. The fully-wound packages P are then collected by, e.g., **a** package collector (not illustrated).

### (Supporting state of Contact Roller)

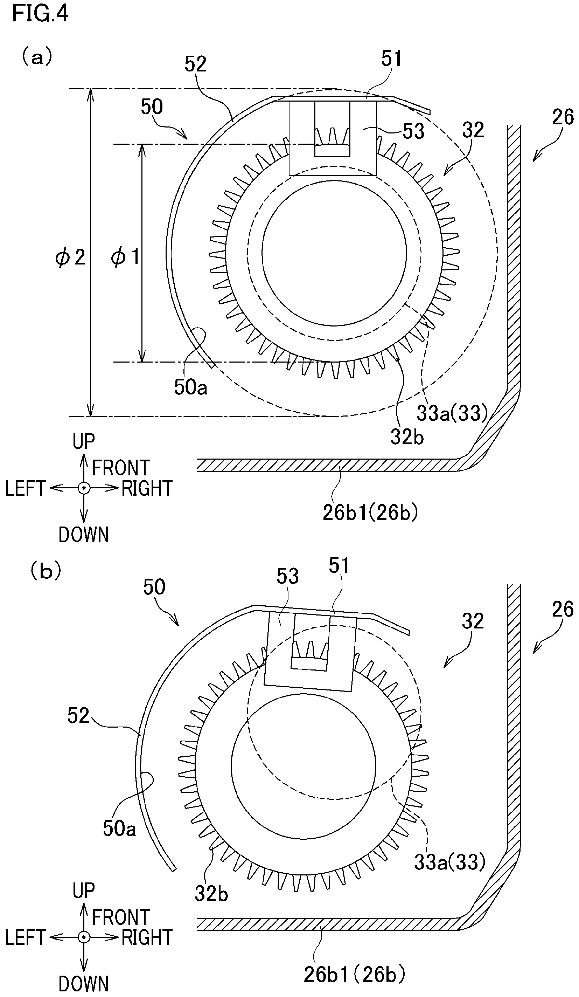

The following will describe the supporting state of the contact roller 25 with reference to FIG. 3 and FIG. **4****.** The contact roller 25 is supported by the supporting body 20b via the roller supporting mechanism 40. As shown in FIG. 1 and FIGs. 3(a) and 3(b), the roller supporting mechanism 40 includes, e.g., supporting portions 41 and 42, arm portions 43 and 44, and a swing shaft 45. The supporting portion 41 rotatably supports the contact roller 25 at the front end portion of the contact roller 25 in the front-rear direction. The supporting portion 42 rotatably supports the contact roller 25 at a rear end portion of the contact roller 25 in the front-rear direction. The arm portion 43 has one end portion connected to the supporting portion 41, and extends toward the supporting body 20b in the direction orthogonal to the front-rear direction. The arm portion 44 has one end portion connected to the supporting portion 42, and extends toward the supporting body 20b in the direction orthogonal to the front-rear direction. The swing shaft 45 extends in the front-rear direction. A front end portion of the swing shaft 45 is connected to the other end portion of the arm portion 43, and a rear end portion of the swing shaft 45 is connected to the other end portion of the arm portion 44. The front end portion and rear end portion of the swing shaft 45 are swingably supported by the supporting body 20b.

The roller supporting mechanism 40 includes a first movement mechanism 46 (see FIG. 3(a)) configured to move the contact roller 25 from the initial position in order to adjust the size of the contact pressure applied to the packages P. The first movement mechanism 46 is configured to move the contact roller 25 so that the position of the contact roller 25 changes on a virtual plane orthogonal to the front-rear direction. When the contact roller 25 is moved by the first movement mechanism 46, the contact roller 25 moves parallelly while the axial direction of the contact roller 25 does not change. In the present embodiment, the first movement mechanism 46 is configured to cause the arm portion 43 to swing about the swing shaft 45. The first movement mechanism 46 is, e.g., a fluid cylinder such as an air cylinder. A motor may be used as the first movement mechanism 46.

As shown in FIG. 3(a), as the output of the first movement mechanism 46 is increased, force is applied to the arm portion 43 so as to swing counterclockwise. At this time, force is applied to the contact roller 25 so as to move from a position indicated by solid lines toward a position indicated by dotted lines (move upward). Because of this, the contact pressure applied to the packages P is decreased. As the output of the first movement mechanism 46 is decreased, force is applied to the arm portion 43 so as to swing clockwise because of the gravity. At this time, force is applied to the contact roller 25 so as to move from a position indicated by dotted lines toward a position indicated by solid lines (move downward). Because of this, the contact pressure applied to the package P is increased.

The controller 5 is configured to control the first movement mechanism 46 to cause the contact roller 25 to move upward in accordance with thickening of the packages P, during a winding-start initial period which begins when the yarns Y start to be wound onto the bobbins B and which ends when the winding diameter of each package P reaches a predetermined size. The controller 5 is configured to control the turret motor 23a to rotate the turret 23 in accordance with the thickening of the packages P so as to cause the packages P move downward, during an actual winding period which begins when the winding diameter of each package P reaches the predetermined size and which ends when the formation of each package P is completed. That is, the moving distance of the contact roller 25 by means of the first movement mechanism 46 is long during the winding-start initial period and is short during the actual winding period. This control may be performed by a unit different from the controller 5 configured to control the sections of the yarn winder 4, such as a controller configured to control the entire take-up apparatus 1.

In regard to the above, as the packages P grow fat as the yarns Y are wound onto the bobbins B, the cantilevered bobbin holder 24 is warped downward and especially its front portion significantly hangs down on account of the weight of the packages P. That is, the bobbin holder 24 is tilted from the horizontal direction (front-rear direction). When the bobbin holder 24 becomes no longer parallel to the contact roller 25, the magnitude of the contact pressure may become different between the packages P so that the packages P are different in quality. Therefore, the roller supporting mechanism 40 includes a second movement mechanism 47 (see FIG. 3(b)) configured to move the contact roller 25 so as to be tilted from the horizontal direction (front-rear direction) in accordance with the thickening of the packages P. That is, the second movement mechanism 47 is configured to move the contact roller 25 so that the degree of a tilt of the axial direction of the contact roller 25 with respect to the horizontal direction (front-rear direction) changes. As the contact roller 25 is moved by the second movement mechanism 47, the axial direction of the contact roller 25 at the initial position (of the contact roller 25 substantially in parallel to the front-rear direction) changes so as to be tilted from the front-rear direction.

In the present embodiment, the second movement mechanism 47 is configured to move the rear end portion of the swing shaft 45 up and down. The second movement mechanism 47 is a fluid cylinder such as an air cylinder, etc. A motor may be used as the second movement mechanism 47. FIG. 3(b) indicates the roller supporting mechanism 40 with the contact roller 25 at the initial position, by using solid lines. As shown in FIG. 3(b), as the second movement mechanism 47 moves the rear end portion of the swing shaft 45 upward to a position indicate by dotted lines from a position indicated by solid lines, the contact roller 25 is tilted. To be more specific, the contact roller 25 is tilted so that its rear end portion is positioned above its front end portion.

As the contact roller 25 is moved by the first movement mechanism 46 and the second movement mechanism 47, the contact roller motor 32 attached to the contact roller 25 is also moved. In this regard, the contact roller motor 32 is moved inside the front cover 26. The moving distance of the contact roller 25 by means of the second movement mechanism 47 is relatively short. With this arrangement, after being significantly moved by the first movement mechanism 46 during the winding-start initial period, the contact roller 25 is only slightly moved to adjust the contact pressure during the actual winding period. The position of the fan 33 configured to cool the contact roller motor 32 is therefore preferably decided based on that of the contact roller motor 32 during the actual winding period. In the present embodiment, when viewed in the front-rear direction, the fan 33 is positioned so that the center of the contact roller motor 32 is substantially identical with that of an outlet 33a of the fan 33 during the actual winding period. Because the contact roller 25 slightly moves even during the actual winding period, the contact roller motor 32 also slightly moves. When viewed in the front-rear direction, the center of the outlet 33a of the fan 33 may be positioned within a traveling range of the center of the contact roller motor 32 during the actual winding period.

### (Contact Roller Motor and Its Surroundings)

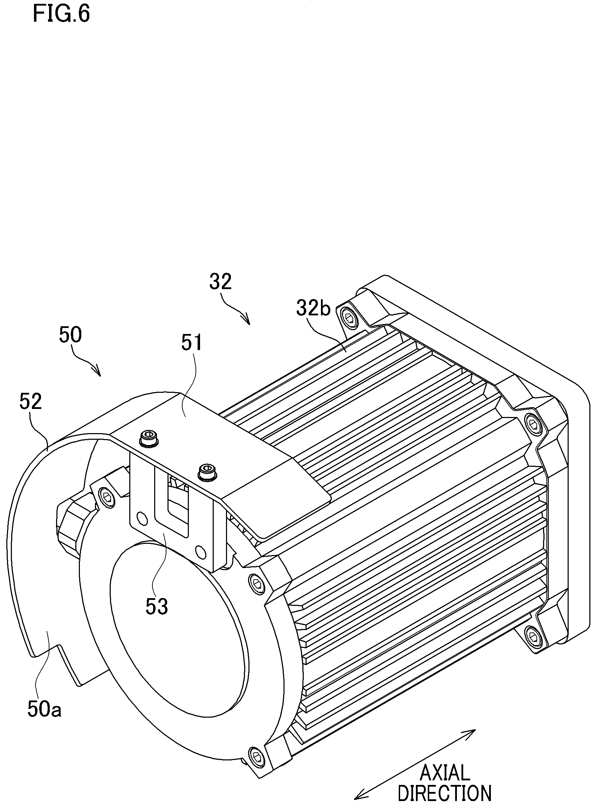

The following will detail the contact roller motor 32 and its surroundings with reference to FIG. 5 and FIG. 6. FIG. 5 shows the contact roller 25 at the initial position, whose axial direction is the front-rear direction. The axial direction of the contact roller 25 will be simply referred to as the "axial direction" in the following description and FIGs. 5 and 6.

As shown in FIG. 5, a rotor 32a of the contact roller motor 32 is attached to a front end portion of a rotational axis 25a of the contact roller 25 via the coupling 35. As shown in FIG. 6, an outer circumferential surface of the contact roller motor 32 is provided with protruding fins 32b extending along the axial direction. The fins 32b are aligned in a circumferential direction of the contact roller motor 32.

As shown in FIG. 5, a part of a front surface of the contact roller motor 32 is an attachment surface 32c to which a supporting member 53 is attached. The supporting member 53 is provided for supporting a flow adjuster 50 described later on the contact roller motor 32. The attachment surface 32c is recessed as compared to the remaining part of the front surface of the contact roller motor 32.

As shown in FIG. 5, the front cover 26 is formed of a base portion 26a and a side portion 26b. The base portion 26a is a plate-like member which is thick in the front-rear direction. The side portion 26b extends rearward from an edge portion of the base portion 26a. The side portion 26b extends from the entire circumference of the base portion 26a. That is, the side portion 26b is annular in shape when viewed in the front-rear direction. The front cover 26 is box-shaped by the base portion 26a and the side portion 26b, and provided with an opening on its rear side. The base portion 26a is opposite to the contact roller 25 over the contact roller motor 32 in the front-rear direction. The base portion 26a is provided with an opening 26a1 penetrating the base portion 26a in the front-rear direction.

The fan 33 is attached to the front cover 26 while being positioned in the opening 26a1 of the base portion 26a of the front cover 26. In the present embodiment, the fan 33 is an axial-flow fan. The fan 33 may be a blower fan or a cross-flow fan. When the contact roller 25 is positioned at the initial position, the distance L1 between the attachment surface 32c of the contact roller motor 32 and the fan 33 is 45 mm in the front-rear direction.

As described above with FIG. 4(a), when viewed in the front-rear direction, the fan 33 is positioned so that the center of the outlet 33a is substantially identical with that of the contact roller motor 32 during the actual winding period. Furthermore, the fan 33 viewed in the front-rear direction is positioned so that the outlet 33a at least partially overlaps the contact roller motor 32, which is positioned within the traveling range of the contact roller motor 32 when the contact roller 25 is moved by the first movement mechanism 46 and the second movement mechanism 47. For example, as shown in FIG. 4(b), when the contact roller 25 viewed in the front-rear direction is positioned at the initial position, the outlet 33a at least partially overlaps the contact roller motor 32. No matter where the contact roller motor 32 is positioned in its traveling range, when viewed in the front-rear direction, the outlet port 33a at least partially overlaps the contact roller motor 32.

As shown in FIG. 6, the flow adjuster 50 configured to adjust the cooling wind sent from the fan 33 is attached to the contact roller motor 32. The flow adjuster 50 is configured to adjust the cooling wind sent from the fan 33, so as to flow along the axial direction (i.e., a direction in which the fins 32b extend).

As shown in FIG. 5, the flow adjuster 50 is provided between the fan 33 and the contact roller 25 in the front-rear direction and inside the front cover 26. The flow adjuster 50 is positioned not to oppose the fan 33 in a direction orthogonal to the front-rear direction (in the left-right direction and the up-down direction). The flow adjuster 50 is provided across a front end portion of the contact roller motor 32 in the front-rear direction. That is, a front portion of the flow adjuster 50 does not oppose the contact roller motor 32 in the direction orthogonal to the front-rear direction (in the left-right direction and the up-down direction). A rear portion of the flow adjuster 50 opposes a part of the contact roller motor 32 in the direction orthogonal to the front-rear direction (in the left-right direction and the up-down direction). One surface of the flow adjuster 50 opposes the contact roller motor 32 in the direction orthogonal to the front-rear direction, and extends in the axial direction. The length L2 of the flow adjuster 50 is 49.4 mm in the axial direction. The distance L3 between the attachment surface 32c of the contact roller motor 32 and a front end of the flow adjuster 50 is 11.9 mm in the axial direction.

As shown in FIGs. 4(a) and 4(b), when viewed in the front-rear direction, the flow adjuster 50 is provided around a part of the circumference of the contact roller motor 32. When viewed in the front-rear direction, a flow adjusting surface 50a of the flow adjuster 50 faces the contact roller motor 32 side and extends along the axial direction.

The flow adjuster 50 includes a first portion 51 covering an upper part of the outer circumferential surface of the contact roller motor 32, and a second portion 52 covering a left part of the outer circumferential surface of the contact roller motor 32. A supporting member 53 supporting the flow adjuster 50 on the contact roller motor 32 is attached to the first portion 51. When viewed in the front-rear direction, the second portion 52 is circular-arc-shaped and concentric with the contact roller motor 32.

The diameter φ1 of the contact roller motor 32 (outer diameter of the motor except the fins 32b) is 140 **mm.** When the fins 32b are included, the length of the contact roller motor 32 is 145 mm in the up-down direction. The inner diameter φ2 of the second portion 52 of the flow adjuster 50 is 210 mm. That is, the distance between the outer circumferential surface of the contact roller motor 32 and an inner side surface of the second portion 52 of the flow adjuster 50 is 35 mm in a radial direction of the contact roller motor 32.

Because the flow adjuster 50 is attached to the contact roller motor 32, the flow adjuster 50 is also moved together as the contact roller motor 32 when the contact roller 25 is moved by the first movement mechanism 46 and the second movement mechanism 47. In the present embodiment, as shown in FIG. 4(b), when viewed in the front-rear direction, the flow adjuster 50 is configured to move so as not to overlap the outlet 33a of the fan 33. When viewed in the front-rear direction, the flow adjuster 50 may overlap the outlet 33a of the fan 33.

The flow adjuster 50 is provided inside the front cover 26. As shown in FIGs. 4(a) and 4(b), a part of the side portion 26b of the front cover 26 functions as a flow adjusting unit 26b1 configured to adjust the cooling wind sent from the fan 33. When viewed in the front-rear direction, the flow adjusting unit 26b1 is provided around one part of the circumference of the contact roller motor 32. The flow adjusting unit 26b1 covers a right and lower parts of the outer circumferential surface of the contact roller motor 32. When viewed in the front-rear direction, (i) the flow adjusting unit 26b1 of the front cover 26 is not provided around another part of the circumference of the contact roller motor 32 and (ii) the flow adjuster 50 is provided around this part.

When viewed in the front-rear direction, the flow adjuster 50 and the flow adjusting unit 26b1 of the front cover 26 suppress the cooling wind from flowing in a direction away from the contact roller motor 32. In this regard, the cooling wind is sent from the fan 33. The cooling wind sent from the fan 33 flows rearward in a gap between the outer circumferential surface of the contact roller motor 32 and the flow adjuster 50 and a gap between the outer circumferential surface of the contact roller motor 32 and the flow adjusting unit 26b1 of the front cover 26.

### (Comparison Test)

The comparison test was performed between (i) a case (Example) where a fan and flow adjuster ware provided, (ii) a case (Comparative Example 1) where a fan was provided while a flow adjuster was not provided, and a case where a fan was not provided (Comparative Example 2). The fan is configured to send cooling wind to the contact roller motor as in the above-described embodiment, and the flow adjuster is configured to adjust the cooling wind sent from the fan. In the test, the winding speed of yarns Y (circumferential speed of a contact roller) was set to 5300 [m/min]. A coupling connecting the contact roller to the contact roller motor was used and formed of the following members: hubs which are respectively attached to a rotational axis of the contact roller and a rotor of the contact roller motor; and a spider which is provided between the hubs and which is made of an elastic material. The room temperature was 22.3 °C in Example, 25.2 °C in Comparative Example 1, and 17.1 °C in Comparative Example 2.

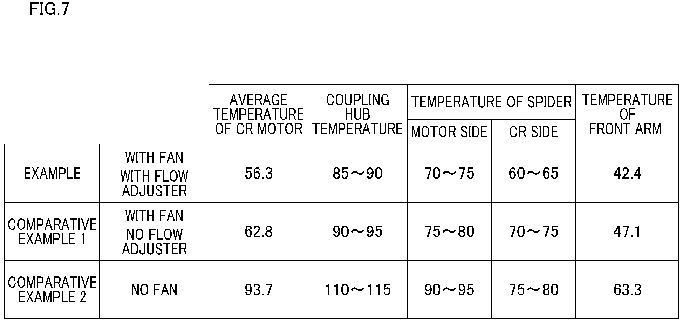

FIG. 7 shows results of the comparison test. The average temperature of the contact roller motor (CR motor) is an average value of temperatures measured at plural positions on a surface of the contact roller motor. The coupling hub temperature is measured at one hub provided on the contact roller motor side of the coupling. The temperature of the spider was measured on each of the contact roller motor side (the motor side) and the contact roller side (the CR side). The temperature of an arm portion provided in front of the contact roller was also measured. All of these temperatures were the most lowest in Example, the second lowest in Comparative Example 1, and the third lowest in Comparative Example 2. That is, the provision of the fan configured to send the cooling wind to the contact roller motor makes it possible to decrease these temperatures. Furthermore, the provision of the flow adjuster makes it possible to further decrease these temperatures. That is, the comparison test showed that the flow adjuster enhanced a cooling effect.

### (Characteristics of Embodiment)

As described above, the yarn winder 4 of the present embodiment is configured to wind the yarns Y onto the respective bobbins B so as to form the packages P. This yarn winder 4 includes: the bobbin holders 24 to each of which bobbins B are attached; the contact roller 25 which extends at least in the front-rear direction and which is configured to apply the contact pressure to the outer circumferential surfaces of the packages P; the first movement mechanism 46 and the second movement mechanism 47 which are configured to move the contact roller 25; the contact roller motor 32 which is attached to the front end portion of the contact roller 25 in the front-rear direction and which is configured to rotationally drive the contact roller 25; the front cover 26 includes the base portion 26a and which covers the contact roller motor 32, the base portion 26a opposing the contact roller 25 over the contact roller motor 32 in the front-rear direction and being provided with the opening 26a1 penetrating the base portion 26a1 in the front-rear direction; and the fan 33 which is attached to the front cover 26 while being provided in the opening 26a1 of the front cover 26 and which is configured to send the cooling wind to the contact roller motor 32 side in the front-rear direction. The first movement mechanism 46 is configured to move the contact roller 25 so that the position of the contact roller 25 changes on the virtual plane orthogonal to the front-rear direction. That is, the second movement mechanism 47 is configured to move the contact roller 25 so that the axial direction of the contact roller 25 changes. The contact roller motor 32 is configured to move inside the front cover 26 as the contact roller 25 is moved by the first movement mechanism 46 and the second movement mechanism 47. The fan 33 viewed in the front-rear direction is positioned so that the outlet 33a at least partially overlaps the contact roller motor 32, which is positioned within the traveling range of the contact roller motor 32 when the contact roller 25 is moved by the first movement mechanism 46 and the second movement mechanism 47.

According to the arrangement above, the fan 33 is attached to the front cover 26. Being different from a case where the fan 33 is attached to the contact roller motor 32, it is therefore unnecessary to form a large opening on the front cover 26. Therefore, the contact roller motor 32 is protected by the front cover 26. Furthermore, the outlet 33a of the fan 33 viewed in the front-rear direction is positioned so as to at least partially overlap the contact roller motor 32, which is positioned within the traveling range of the contact roller motor 32 when the contact roller 25 is moved by the first movement mechanism 46 and the second movement mechanism 47. Therefore, even when the contact roller motor 32 moves relative to the fixed fan 33, the cooling wind sent from the fan 33 reliably hits the contact roller motor 32 so as to effectively cool the contact roller motor 32.

The yarn winder 4 of the present embodiment further includes the flow adjuster 50 which is provided between the fan 33 and the contact roller 25 in the front-rear direction and around a part of the circumference of the contact roller motor 32 viewed in the front-rear direction and which is configured to adjust the cooling wind sent from the fan 33. The flow adjuster 50 makes it possible to suppress the cooling wind, which is sent from the fan 33, from flowing away from the contact roller motor 32 viewed in the front-rear direction. It is therefore possible to reliably send the cooling wind from the fan 33 to the vicinity of the contact roller motor 32 so as to further effectively cool the contact roller motor 32.

In the yarn winder 4 of the present embodiment, the flow adjuster 50 opposes a part of the contact roller motor 32 in a direction orthogonal to the front-rear direction. With this arrangement, the flow adjuster 50 makes it possible to allow the cooling wind sent from the fan 33 to flow in the gap between the contact roller motor 32 and the flow adjuster 50. It is therefore possible to further effectively cool the contact roller motor 32.

In the yarn winder 4 of the present embodiment, the flow adjuster 50 is provided across the front end portion of the contact roller motor 32 in the front-rear direction. With this arrangement, a part of the flow adjuster 50 is provided in front of the contact roller motor 32 in the front-rear direction, and this part of the flow adjuster 50 makes it possible to allow the cooling wind from the fan 33 to flow into the gap between the contact roller motor 32 and the flow adjuster 50. It is therefore possible to further effectively cool the contact roller motor 32.

In the yarn winder 4 of the present embodiment, the flow adjuster 50 is attached to the contact roller motor 32. With this arrangement, even when the contact roller motor 32 moves, the positional relationship between the flow adjuster 50 and the contact roller motor 32 does not change. It is therefore possible to reliably prevent the interference between the flow adjuster 50 and the contact roller motor 32.

In the yarn winder 4 of the present embodiment, when viewed in the front-rear direction, the second portion 52 of the flow adjuster 50 is circular-arc-shaped and concentric with the contact roller motor 32. It is therefore possible to cool the contact roller motor 32 as uniformly as possible.

In the yarn winder 4 of the present embodiment, the flow adjuster 50 is positioned not to oppose the fan 33 in a direction orthogonal to the front-rear direction. With this arrangement, even when the contact roller motor 32 moves, the interference between the flow adjuster 50 and the fan 33 is avoided.

In the yarn winder 4 of the present embodiment, the flow adjuster 50 is configured to adjust the cooling wind sent from the fan 33 so as to flow along the axial direction of the contact roller 25. With this arrangement, the contact roller motor 32 is further effectively cooled by the cooling wind flowing along the axial direction of the contact roller 25.

In the yarn winder 4 of the present embodiment, the contact roller motor 32 is provided with the protruding fins 32b extending along the axial direction of the contact roller 25. With this arrangement, the flow adjuster 50 allows the cooling wind sent from the fan 33 to flow along a direction in which the fins 32b extend. Therefore, the cooling effect of the fins 32b is sufficient.

In the yarn winder 4 of the present embodiment, the front cover 26 is box-shaped and provided with an opening at its rear side, and the flow adjuster 50 is provided inside the front cover 26. The front cover 26 includes the flow adjusting unit 26b1 which is provided around one part of the circumference of the contact roller motor 32 viewed in the front-rear direction and which is configured to adjust the cooling wind sent from the fan 33. When viewed in the front-rear direction, (i) the flow adjusting unit 26b1 is not provided around another part of the circumference of the contact roller motor 32 and (ii) the flow adjuster 50 is provided around this part. Because (i) the flow adjusting unit 26b1 of the front cover 26 is not provided around another part of the circumference of the contact roller motor 32 and (ii) the flow adjuster 50 is provided around this part, the cooling wind sent from the fan 33 is adjusted in a wide range around the circumference of the contact roller motor 32. It is therefore possible to further effectively cool the contact roller motor 32.

The yarn winder 4 of the present embodiment includes: the turret 23 which rotatably cantilevers the bobbin holders 24 and which is rotatable; the turret motor 23a configured to rotate the turret 23; and the controller 5. This controller 5 is configured to: control the first movement mechanism 46 to move the contact roller 25 in accordance with the thickening of the packages P during the winding-start initial period which begins when the yarns Y start to be wound onto the bobbins B and which ends when the winding diameter of each package P reaches a predetermined size; and control the turret motor 23a to rotate the turret 23 in accordance with the thickening of the packages P so as to move the packages P during the actual winding period which begins when the winding diameter of each package P reaches the predetermined size and which ends when the formation of the packages P is completed. Furthermore, when viewed in the front-rear direction, the fan 33 is provided so that the center of the outlet 33a is identical with that of the contact roller motor 32 during the actual winding period. With this arrangement, the cooling wind sent from the fan 33 reliably hits the contact roller motor 32 so as to effectively cool the contact roller motor 32 during the actual winding period.

The embodiment of the present invention is described hereinabove. However, the specific structure of the present invention shall not be interpreted as to be limited to the above described embodiment. The scope of the present invention is defined not by the above embodiments but by claims set forth below, and shall encompass the equivalents in the meaning of the claims and every modification within the scope of the claims.

In the embodiment above, the first movement mechanism 46 and the second movement mechanism 47 are provided as movement mechanisms configured to move the contact roller 25. However, the disclosure is not limited to this. This may be arranged as long as a mechanism is provided to move the contact roller 25 so that at least one of the axial direction of the contact roller 25 and the position of the contact roller 25 on the virtual plane orthogonal to the front-rear direction changes.

In the embodiment above, the contact roller motor 32 is attached to the front end portion of the contact roller 25. However, the contact roller motor 32 may be attached to the rear end portion of the contact roller 25.

In the embodiment above, when viewed in the front-rear direction, the flow adjuster 50 is provided around at least a part of the circumference of the contact roller motor 32. However, the disclosure is not limited to this. The flow adjuster 50 may be provided around the entire circumference of the contact roller motor 32. The flow adjuster 50 may not be provided.

In the embodiment above, the flow adjuster 50 opposes a part of the contact roller motor 32 in a direction orthogonal to the front-rear direction. However, the disclosure is not limited to this. The flow adjuster 50 may oppose the entire contact roller motor 32 in the direction orthogonal to the front-rear direction. The flow adjuster 50 may not oppose the contact roller motor 32 in the direction orthogonal to the front-rear direction.

In the embodiment above, the flow adjuster 50 is provided across the front end portion of the contact roller motor 32 in the front-rear direction. However, the disclosure is not limited to this. The flow adjuster 50 may be provided behind the front end portion of the contact roller motor 32. The flow adjuster 50 may be provided in front of the front end portion of the contact roller motor 32.

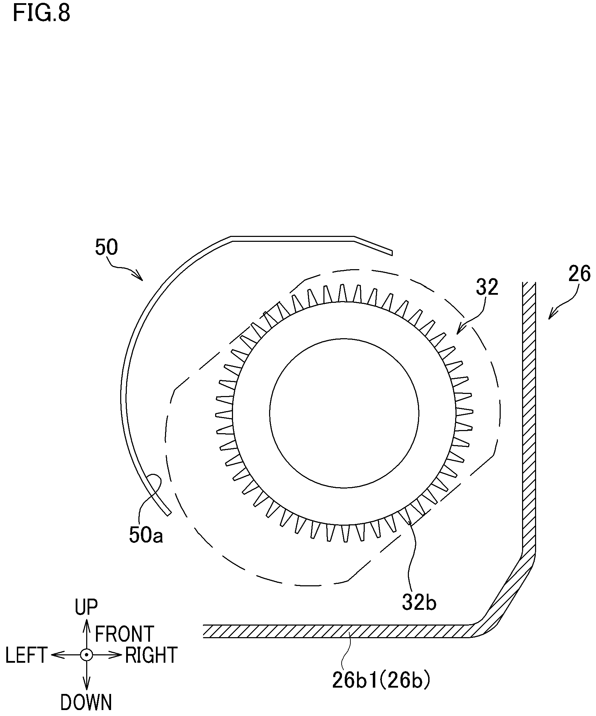

In the embodiment above, the flow adjuster 50 is attached to the contact roller motor 32. However, the disclosure is not limited to this. For example, the flow adjuster 50 may be attached and fixed to the front cover 26, etc. In this case, even when the contact roller motor 32 moves as the contact roller 25 moves, the flow adjuster 50 viewed in the front-rear direction is always provided around a part of the circumference of the contact roller motor 32. For example, as shown in FIG. 8, the flow adjuster 50 is provided outside the traveling range of the contact roller motor 32 (outside an area indicated by dotted lines) so as to cover at least a part of the traveling range of the contact roller 32. The flow adjusting surface 50a of the fixed flow adjuster 50 extends along, e.g., the front-rear direction.

In the embodiment above, when viewed in the front-rear direction, the second portion 52 of the flow adjuster 50 is circular-arc-shaped and concentric with the contact roller motor 32. However, the disclosure is not limited to this. The entire flow adjuster 50 may be concentric with the contact roller motor 32. The flow adjuster 50 may not include a portion which is circular-arc-shaped and concentric with the contact roller motor 32.

In the embodiment above, the flow adjuster 50 is positioned not to oppose the fan 33 in a direction orthogonal to the front-rear direction. However, the disclosure is not limited to this. The flow adjuster 50 may be positioned to oppose the fan 33 in the direction orthogonal to the front-rear direction.

In the embodiment above, the flow adjuster 50 is configured to adjust the cooling wind sent from the fan 33 so as to flow along the axial direction of the contact roller 25. However, the disclosure is not limited to this. The flow adjuster 50 may be differently arranged as long as it suppresses the cooling wind, which is sent from the fan 33, at least from flowing away from the contact roller motor 32 viewed in the front-rear direction.

In the embodiment above, the contact roller motor 32 is provided with the protruding fins 32b extending along the axial direction of the contact roller 25. However, the disclosure is not limited to this. The fins 32b may not extend along the axial direction of the contact roller 25. The fins 32b may not be provided.

In the embodiment above, the side portion 26b of the front cover 26 extends from the entire circumference of the base portion 26a. However, the disclosure is not limited to this. The front cover 26 may be box-shaped so that a part of the side portion 26b is cut out. The side portion 26b may extend from a portion different from the edge portion of the base portion 26a. The side portion 26b may not include the flow adjusting unit 26b1.

In the embodiment above, when viewed in the front-rear direction, the fan 33 is provided so that the center of the outlet 33a is identical with that of the contact roller motor 32 during the actual winding period. However, the disclosure is not limited to this. When viewed in the front-rear direction, the center of the outlet 33a of the fan 33 may be deviated from that of the contact roller motor 32 during the actual winding period.

## Claims

1. A yarn winder (4) configured to wind yarns (Y) respectively onto bobbins (B) so as to form packages (P), comprising:
a bobbin holder (24) to which the bobbins (B) are attached;
a contact roller (25) which extends at least in a predetermined drawing direction and which is configured to apply a contact pressure to an outer circumferential surface of each of the packages (P);
a movement mechanism (46, 47) configured to move the contact roller (25);
a motor (32) which is attached to one end portion of the contact roller (25) on one side in the drawing direction and which is configured to rotationally drive the contact roller (25);
a cover member (26) which covers the motor (32) and which includes a portion which opposes the contact roller (25) over the motor (32) in the drawing direction and which is provided with an opening (26a1) penetrating the portion in the drawing direction; and
a fan (33) which is attached to the cover member (26) while being provided in the opening (26a1) of the cover member (26) and which is configured to send cooling wind to the motor (32) side in the drawing direction,
the movement mechanism (46, 47) being configured to move the contact roller (25) so that at least one of an axial direction of the contact roller (25) and a position of the contact roller (25) on a virtual plane orthogonal to the drawing direction changes,
the motor (32) being configured to move inside the cover member (26) as the contact roller (25) is moved by the movement mechanism (46, 47), and
when viewed in the drawing direction, the fan (33) being provided so that at least a part of an outlet (33a) overlaps the motor (32) positioned in a traveling range of the motor (32) when the contact roller (25) is moved by the movement mechanism (46, 47).

2. The yarn winder (4) according to claim 1, further comprising a flow adjuster (50) which is provided between the fan (33) and the contact roller (25) in the drawing direction and around at least a part of the circumference of the motor (32) viewed in the drawing direction and which is configured to adjust the cooling wind sent from the fan (33).

3. The yarn winder (4) according to claim 2, wherein, the flow adjuster (50) opposes at least a part of the motor (32) in a direction orthogonal to the drawing direction.

4. The yarn winder (4) according to claim 3, wherein, the flow adjuster (50) is provided across one end portion of the motor (32) on the one side in the drawing direction.

5. The yarn winder (4) according to any one of claims 2 to 4, wherein, the flow adjuster (50) is attached to the motor (32).

6. The yarn winder (4) according to claim 5, wherein, when viewed in the drawing direction, at least a part of the flow adjuster (50) is circular-arc-shaped and concentric with the motor (32).

7. The yarn winder (4) according to claim 5 or 6, wherein, the flow adjuster (50) is positioned not to oppose the fan (33) in the direction orthogonal to the drawing direction.

8. The yarn winder (4) according to any one of claims 5 to 7, wherein, the flow adjuster (50) is configured to adjust the cooling wind, which is sent from the fan (33), so as to flow along the axial direction of the contact roller (25).

9. The yarn winder (4) according to claim 8, wherein, the motor (32) is provided with a protruding fin (32b) extending along the axial direction.

10. The yarn winder (4) according to any one of claims 2 to 9, wherein, the cover member (26) is box-shaped and provided with an opening on the other side of the cover member (26) in the drawing direction,
the flow adjuster (50) is provided inside the cover member (26),
the cover member (26) includes a flow adjusting unit (26b1) which is provided around one part of the circumference of the motor (32) viewed in the drawing direction and which is configured to adjust the cooling wind sent from the fan (33),
the flow adjusting unit (26b1) is not provided around another part of the circumference of the motor (32) viewed in the drawing direction, and the flow adjuster (50) is provided around the another part of the circumference of the motor (32).

11. The yarn winder (4) according to any one of claims 1 to 10, further comprising: a turret (23) which rotatably cantilevers the bobbin holder (24) and which is rotatable;
a turret driving unit (23a) configured to rotate the turret (23); and
a controller (5), wherein,
the controller (5) is configured to:
control the movement mechanism (46, 47) to move the contact roller (25) in accordance with thickening of the packages (P) during a winding-start initial period which begins when the yarns (Y) start to be wound onto the bobbins (B) and which ends when the winding diameter of the each of the packages (P) reaches a predetermined size; and
control the turret driving unit (23a) to rotate the turret (23) in accordance with the thickening of the packages (P) so as to move the packages (P) during an actual winding period which begins when the winding diameter of the each of the packages (P) reaches the predetermined size and which ends when the formation of the packages (P) is completed, and
when viewed in the drawing direction, the fan (33) is provided so that the center of the outlet (33a) is identical with the center of the motor (32) during the actual winding period.
